(19) **Europäisches Patentamt**

**European Patent Office**

**Office européen des brevets**

(11) **EP 0 670 482 B1**

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(51) Int Cl.$^7$: **G01M 15/00**, G01L 3/00

(21) Anmeldenummer: **95101533.8**

(22) Anmeldetag: **04.02.1995**

(54) **Verfahren zur Bestimmung des durch Gaskräfte auf die Kurbelwelle einer Brennkraftmaschine übertragenen Drehmoments**

Procedure for determining the torque transmitted to the crankshaft of a combustion engine by the combustion gas forces

Procédé de détermination du couple transmis au vilebrequin d'un moteur à combustion par les forces de gaz de combustion

(84) Benannte Vertragsstaaten:
**DE FR GB IT**

(30) Priorität: **04.03.1994 DE 4407167**

(43) Veröffentlichungstag der Anmeldung:
**06.09.1995 Patentblatt 1995/36**

(73) Patentinhaber: **DaimlerChrysler AG**
**70567 Stuttgart (DE)**

(72) Erfinder:
• **Gimmler, Helmut**
**D-71409 Schwaikheim (DE)**
• **Nester, Ulrich**
**D-73765 Neuhausen (DE)**
• **Kurz, Gerhard**
**D-73240 Wendlingen (DE)**
• **Huhn, Werner**
**D-71384 Weinstadt (DE)**

(56) Entgegenhaltungen:
**EP-A- 0 434 665     EP-A- 0 437 057**
**EP-A- 0 532 419     WO-A-90/07051**

• **IEEE TRANSACTIONS ON INDUSTRIAL ELECTRONICS AND CONTROL INSTRUMENTATION, Bd. ie-32, Nr. 4, November 1985 NEW YORK US, Seiten 301-307, ARUN K. SOOD ET AL 'engine fault analysis: part II-parameter estimation approach'**
• **U. ADLER ET AL.: "Kraftfahrttechnisches Taschenbuch" , S. 418-419, 1984, ROBERT B GMBH, DUESSELDORF**

**Beschreibung**

Die Erfindung betrifft ein Verfahren zur Bestimmung des durch Gaskräfte auf die Kurbelwelle einer Brennkraftmaschine übertragenen Drehmoments durch Auswerten der Drehzahlinformation gemäß dem Oberbegriff des Patentanspruchs 1.

Aus der DE-OS 40 40 648 ist ein Verfahren zur prüfstandslosen Ermittlung technischer Kennwerte von Verbrennungsmotoren und deren Einzelzylinder bekannt. Hierbei wird aus einer Erfassung der rotierenden Bewegung der Kurbelwelle Drehzahl, Rotationsmoment, Arbeit und Leistung der Brennkraftmaschine oder einzelner Zylinder der Brennkraftmaschine ermittelt.

Von Nachteil bei diesem Verfahren ist die Tatsache, daß die Drehmomente, die aus der Beschleunigung der Kolben und oszillierenden Massenanteile der Pleuel und aus der Kurbelwellentorsion resultieren, nicht berücksichtigt werden.

Ein gattungsgemäßes Verfahren ist aus der EP-A 0 532 419 bekannt. Hierbei wird im Fahrzeug aus der Drehgeschwindigkeit eines fest mit der Kurbelwelle verbundenen Zahnrades für Onboard-Diagnose und/oder Motorsteuerung das Einzelzylinder-Drehmoment bestimmt aus einer Drehmomentbilanz, die das Einzelzylinder-Drehmoment ins Gleichgewicht setzt mit den Anteilen aus Rotation, aus Oszillation, aus Reibung, Nutzung und Belastung und aus Torsion.

Die Aufgabe der Erfindung besteht darin, ein Verfahren zu schaffen, mit dem das von den Kolben über die Pleuelstangen auf die Kurbelwelle übertragene Drehmoment, welches aus den Gasdrücken in den Zylindern resultiert, aus dem Drehzahlsignal auch bei höheren Drehzahlen mit reduzierter Rechenleistung ermittelt werden kann.

Die Aufgabe wird erfindungsgemäß durch die kennzeichnenden Merkmale des Patentanspruchs 1 gelöst.

Durch die Berücksichtigung der Momente der oszillierenden Massen, der Torsionsmomente der Kurbelwelle und der statischen Drehmomente ist es möglich, das Drehmoment, welches von den Kolben über die Pleuelstange auf die Kurbelwelle übertragen wird und welches aus den Gasdrücken in den Zylindern resultiert, zu ermitteln. Aus dieser Größe kann dann die von den einzelnen Zylindern pro Arbeitsspiel abgegebene Arbeit oder andere mit diesem Drehmoment korrelierte Betriebsparameter ermittelt und an die Motorsteuerung oder die On-Board-Diagnose übergeben werden.

Um die Rechenleistung der Auswerteeinheit zu reduzieren, werden die im Normalbetrieb auftretenden Torsionsmomente vorab einmal berechnet und dann in einem Kennfeld gespeichert. Günstig für die Anwendung in der Motorsteuerung ist es, wenn statt der Torsionsmomente die daraus abgeleitete Wirkung auf eine Regelgröße der Motorsteuerung in einem Kennfeld abgelegt wird.

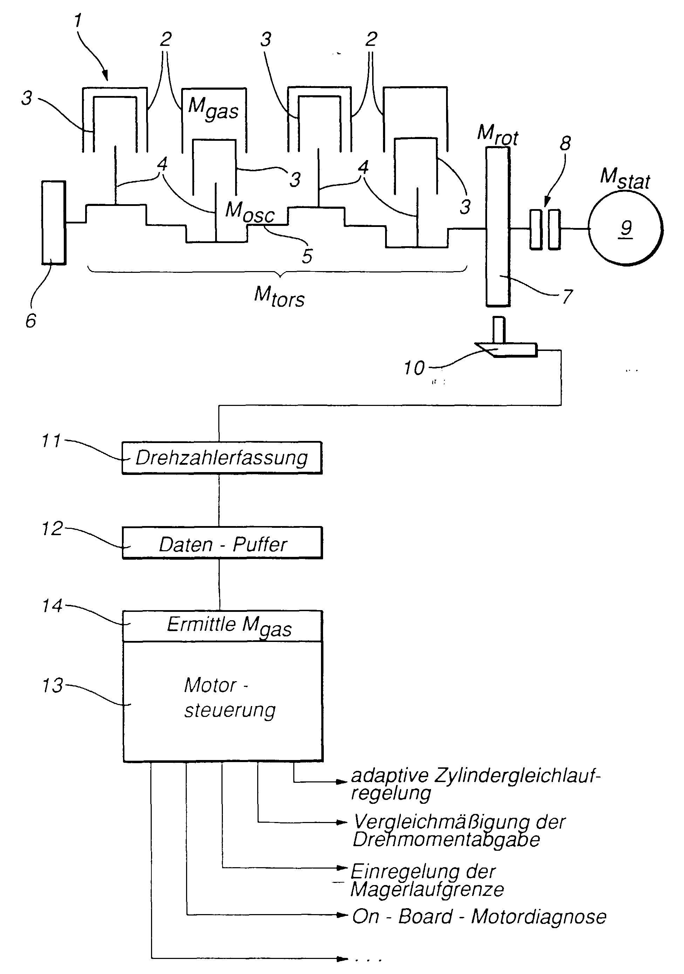

Weitere Vorteile und Ausgestaltungen gehen aus den abhängigen Ansprüchen und der Beschreibung hervor. Die Erfindung ist nachstehend anhand der Zeichnung, die den prinzipiellen Aufbau des erfindungsgemäßen Verfahrens für eine Vierzylinder-Brennkraftmaschine zeigt, näher beschrieben.

Der Einsatz elektronischer Motorsteuerungen für Diesel- und Ottomotoren gewinnt immer mehr an Bedeutung. Den dadurch entstehenden Verbrauchs- und Abgasvorteilen stehen jedoch bisher ungelöste Probleme bei der exakten Mengenzumessung aufgrund hoher Bauteiltoleranzen und Altersdriften gegenüber. Die intensiven Anstrengungen zur Einhaltung immer kleinerer Toleranzen und zur Verbesserung der Langzeitstabilität von Magnetventilen und anderen für die Mengenzumessung relevanten Bauteile könnten durch Einsatz einer Motorregelung nahezu auf Null reduziert werden. Bisher stand jedoch kein preisgünstiges und serienfähiges Verfahren zur Erkennung solcher toleranzbedingter zylinderspezifischer Leistungsunterschiede zur Verfügung.

Das erfindungsgemäße Verfahren ermöglicht es nun, über eine genaue Drehzahlmessung und mit Hilfe eines detaillierten Motormodells eine Regelgröße zur Identifikation der zylinderspezifischen Leistung bereitzustellen. Anhand dieser aus der Drehzahl abgeleiteten Größen kann ein Regler zum Ausgleich fertigungs- und altersbedingter Unterschiede im gesamten Motorkennfeld zylinderindividuell realisiert werden. Dabei sind die Drehzahl und die daraus ableitbaren Größen, wie Drehwinkel, Winkelgeschwindigkeit oder Winkelbeschleunigung die einzigen Größen, die für die Berechnung der pro Zylinder und Arbeitsspiel abgegebenen Arbeit beziehungsweise der entsprechenden Regelgröße benötigt werden.

Die Zeichnung zeigt das dem erfindungsgemäßen Verfahren zugrundeliegende Prinzip für eine Vierzylinder-Brennkraftmaschine. Die insgesamt mit 1 gekennzeichnete Brennkraftmaschine enthält vier Zylinder 2, in denen jeweils ein Kolben 3 beweglich geführt ist. Die Kolben 3 sind jeweils über ein Pleuel 4 mit einer Kurbelwelle 5, an der ein Schwingungsdämpfer 6 und ein Anlasserzahnkranz mit Schwungrad 7 befestigt sind, verbunden. Am Anlasserzahnkranz 7 kann eventuell noch ein weiteres Inkrementalrad vorgesehen werden. Die Kurbelwelle 5 ist über eine Kupplung 8 an den insgesamt mit 9 gekennzeichneten Triebstrang der Brennkraftmaschine 1 gekoppelt. Über einen Sensor 10 wird am Zahnrad 7 das Drehzahlsignal abgegriffen und in einer Auswerteeinheit 11 ausgewertet. Die Drehzahlinformation wird dann über einen Datenpuffer 12 an die Motorsteuerung 13 übergeben. Dort wird mit Hilfe eines Mikroprozessors 14 anhand eines Motormodells die durch die Gaskräfte in den Zylindern 2 verursachten Drehmomente $M_{gas}$ ermittelt. Der Mikroprozessor 14 kann dabei in die Motorsteuerung integriert oder als separate Einheit ausgeführt werden. Von der Motorsteuerung 13 wird dann das ermittelte Drehmoment $M_{gas}$, beziehungsweise andere mit dem Drehmoment $M_{gas}$ korrelierte Größen, wie die Motorleistung P, die pro Arbeitsspiel und pro Zylinder 2 an die Kurbelwelle 5 abgegebene Arbeit W oder andere Regelgrößen an die einzelnen Regel- beziehungsweise Diagnosesysteme übergeben. Hierbei kann es sich um eine adaptive Zylindergleichlaufregelung, die Einregelung der Magerlaufgrenze, eine Regelung zur Vergleichmäßigung der Drehmomentabgabe, die On-Board-Motordiagnose oder andere Steuer- oder Regelsysteme handeln.

Die Motordrehzahl n wird vorzugsweise mit einem üblichen Sensor 10 auf der Schwungradseite der Brennkraftmaschine 1 an einem Zahnrad 7 mit vorzugsweise 60 Zähnen erfaßt. Die Zahl der Zähne des Zahnrades 7 muß jedoch zumindest deutlich größer sein als die Zahl der Zylinder 2. Dabei kann ein bereits vorhandener Sensor 10 an einem Inkrementalrad mitverwendet oder ein zusätzlicher Sensor 10 am Anlasserzahnkranz 7 installiert werden. Zur Korrektur von periodisch wiederkehrenden Teilungsfehlern können zusätzliche Korrekturverfahren verwendet werden.

Ausgangspunkt für die Ermittlung des aus den Gasdrücken resultierenden Drehmoments $M_{gas}$ im Mikroprozessor 14 ist ein Motormodell, welches auf dem dynamischen Momentengleichgewicht am Zahnrad 7 basiert. Berücksichtigt werden dabei folgende am Zahnrad 7 direkt oder indirekt angreifende Drehmomente:

- das von den Kolben 3 über die Pleuel 4 auf die Kurbelwelle 5 übertragene Moment $M_{gas}$, das aus den Gasdrücken in den Zylindern 2 resultiert,
- das aus der Massenträgheit resultierende Rotationsmoment $M_{rot}$, das einer Geschwindigkeitsänderung ständig entgegenwirkt,
- das über die Pleuel 4 übertragene oszillierende Moment $M_{osz}$, das aus der Beschleunigung der Kolben 3 und der oszillierenden Massenanteile der Pleuel 4 resultiert,
- das Moment $M_{tors}$ aus der Kurbelwellentorsion der Brennkraftmaschine 1 und
- das aus allen langsam veränderlichen Reib-, Nutz- und Lastmomenten resultierende statische Drehmoment $M_{stat}$.

Da sich diese Drehmomente ständig im Gleichgewicht befinden gilt

$$M_{gas} + M_{rot} + M_{osz} + M_{tors} + M_{stat} = 0$$

Die Berechnung der Rotationsmomente $M_{rot}$ und der oszillierenden Momente $M_{osz}$ basiert auf einem starren Modell des Triebwerkes 9, wobei für die Pleuel 4 eine Zwei-Punkt-Zerlegung verwendet wird. Das Rotationsmoment $M_{rot}$ ergibt sich dann aus den rotierenden Massenträgheiten J der Brennkraftmaschine 1 unter der Verwendung der Winkelbeschleunigung $\dot{\omega}$ zu

$$M_{rot} = -J\dot{\omega}$$

wobei die Winkelbeschleunigung $\dot{\omega}$ durch zeitliche Differentation aus der gemessenen Drehzahl n abgeleitet wird.

Die oszillierenden Drehmomente $M_{osz}$ ergeben sich aus der Kenntnis der relativen Kolbengeschwindigkeit

$$\dot{x} = \sin \Psi + \lambda \frac{\sin \Psi \cos \Psi}{\sqrt{1 - \lambda^2 \sin^2 \Psi}}$$

und der relativen Kolbenbeschleunigung

$$\ddot{x} = \cos \Psi + \lambda \frac{\cos^2 \Psi - \sin^2 \Psi + \lambda^2 \sin^4 \Psi}{\sqrt{1 - \lambda^2 \sin^2 \Psi}^3}$$

zu

$$M_{osz} = -m_0 r^2 \dot{x}(\dot{x}\dot{\omega} + \ddot{x}\omega^2)$$

wobei bedeuten

λ     Pleuelstangenverhältnis
ψ     Kurbelwinkel
ω     Winkelgeschwindigkeit
$\dot{\omega}$     Winkelbeschleunigung
$m_0$     oszillierende Massen
$r$     Kurbelradius

Da die oszillierenden Drehmomente $M_{osz}$ vom Quadrat der Winkelgeschwindigkeit ω abhängen ist klar, daß dieser Anteil bei steigender Drehzahl n an Bedeutung zunimmt und daher bei der Ermittlung des Drehmoments $M_{gas}$ nicht vernachlässigt werden darf.

Neben den rotierenden und den oszillierenden Momenten $M_{rot}$, $M_{osz}$, die auf der Grundlage einer starren Kurbelwelle 5 berechnet werden, muß insbesondere bei höheren Drehzahlen n und in Resonanzbereichen das Torsionsmoment $M_{tors}$ berücksichtigt werden. Hierzu wird die Kurbelwelle 5 als elastisches Feder-Masse-System betrachtet, welches die aufgeprägten Drehmomente M speichert und zeitversetzt wieder abgibt. Die Anregung der Torsionsschwingungen erfolgt dabei immer durch die aufgeprägten Gas- und oszillierenden Massendrehmomente $M_{gas}$, $M_{osz}$. Für die Berechnung dieser Torsionsmomente $M_{tors}$ gibt es mehrere Möglichkeiten. Relativ genau, aber rechenintensiv ist ein im Rahmen der Erfindung nicht verwendetes, iteratives Verfahren, das die im vorherigen Schritt ermittelten Drehmomente $M_{gas}$ extrapoliert und als neue Eingangsgröße verwendet. Eine andere, im Rahmen der Erfindung verwendete Möglichkeit besteht darin, die im Normalbetrieb der Brennkraftmaschine 1 auftretenden Torsionsmomente $M_{tors}$ vorab einmal zu berechnen und in einem betriebsparameterabhängigen Kennfeld zu speichern. Im Betrieb werden diese Werte dann in Abhängigkeit vom momentanen Betriebszustand der Brennkraftmaschine 1 aus dem Kennfeld ausgelesen und für die Ermittlung der Drehmomente $M_{gas}$ bereitgestellt. Wird das zu ermittelnde Drehmoment $M_{gas}$ zur Motorsteuerung verwendet ist es günstiger, anstatt des eigentlichen Torsionsmoments $M_{tors}$ die daraus abgeleitete Wirkung auf eine Regelgröße der Motorsteuerung in einem Kennfeld abzulegen.

Ein bevorzugtes Ausführungsbeispiel für ein Torsionsmodell ist im folgenden näher beschrieben. Zur Berechnung der Torsionsmomente $M_{tors}$ wird ein Schwingungssystem modelliert, mit dem die innerhalb der Brennkraftmaschine auftretenden Torsionsmomente $M_{tors}$ berechnet werden. Typisch ist eine Aufteilung des Schwingungssystems Kurbelwelle in:

-    eine Masse je Kröpfung, an denen die Gas- und oszillierenden Momente (Erregermomente) in das Schwingungssystem eingebracht werden,

-    eine oder mehrere Massen, welche die Kurbelwelle von der letzten abtriebsseitig angebrachten Kröpfung bis zum Schwungrad beschreiben

-    und 3-5 Massen, die die Schwingungen des freien Kurbelwellenendes, insbesondere eines Torsionsschwingungsdämpfers und eines Lüfters beschreiben.

Zwischen diesen Einzel- oder Punktmassen sind jeweils Federn (Drehsteifigkeiten) und Dämpfer (Relativdämpfungen) modelliert, deren Werte für den jeweils verwendeten Motortyp möglichst wirklichkeitsnah identifiziert werden müssen. Weiterhin kann es angebracht sein, sogenannte Absolutdämpfungen vorzusehen, welche die gesamte Schwingungsbewegung als solche dämpfen.

Für das Torsionsschwingungs-Ersatzsystem mit Dämpfung und Erregung ist die Bewegungsgleichung für Drehmassen zugrunde gelegt. Das Erregermoment steht im Gleichgewicht mit den anderen Momenten an dieser Masse:

$$E_L = m_L * \ddot{\varphi}_L + a_L * (\dot{\varphi}_L - \xi) + M_{tors_L} - M_{tors_{L-1}}$$

Dabei sind die eigentlichen Torsionsmomente $M_{tors}$ der angrenzenden Federn und Dämpfer:

$$M_{tors_L} = c_L * (\varphi_L - \varphi_{L+1}) + b_L * (\dot{\varphi}_L - \dot{\varphi}_{L+1})$$

$$M_{tors_{L-1}} = c_{L-1} * (\varphi_{L-1} - \varphi_L) + b_L * (\dot{\varphi}_{L-1} - \dot{\varphi}_L)$$

Damit entstehen Differentialgleichungen folgender Form, die im allgemeinen numerisch zu lösen sind:

Masse $m_{L-1}$

$$m_{L-1} * \ddot{\varphi}_{L-1} + a_{L-1} * (\dot{\varphi}_{L-1} - \xi) + b_{L-1} * (\dot{\varphi}_{L-1} - \dot{\varphi}_L) + c_{L-1} * (\varphi_{L-1} - \varphi_L) = E_{L-1}$$

Masse $m_L$

$$m_L * \ddot{\varphi}_L + a_L * (\dot{\varphi}_L - \xi) + b_L * (\dot{\varphi}_L - \dot{\varphi}_{L+1}) + c_L * (\varphi_L - \varphi_{L+1}) +$$

$$b_{L-1} * (\dot{\varphi}_L - \dot{\varphi}_{L-1}) + c_{L-1} * (\varphi_L - \varphi_{L-1}) = E_L$$

Masse $m_{L+..}$

$$m_{L+..} * \ddot{\varphi}_{L+..} + a_{L+..} * (\dot{\varphi}_{L+..} - \xi) + b_{L+..} * (\dot{\varphi}_{L+..} - \dot{\varphi}_{L+..-1}) + c_{L+..} * (\varphi_{L+..} - \varphi_{L+..-1}) = E_{L+..}$$

Hierbei wurden folgende Größen verwendet:

a = Absolut-Dämpfungswiderstand [Nms]
b = Relativ-Dämpfungswiderstand [Nms]
c = Torsionssteifigkeit [Nm/rad]
m = Trägheitsmasse [kgm**2]
E = Erregermoment [Nm]
$M_{tors}$ = Torsionsmoment [Nm]
$\varphi$ = Torsionswinkel [rad]
$\xi$ = Geschwindigkeit [rad/s] eines nicht schwingenden, aber mitrotierenden Punktes (Schwingungsknoten)
L= Zählindex

In jedem Fall wird aus diesem Modell die Wirkung der Torsionsschwingung auf die Drehgeschwindigkeit der Masse abgeschätzt, an welcher der Sensor zur Messung der Motordrehzahl angebracht ist. Die bis dahin störend überlagerten Anteile können auf diese Weise eliminiert werden.

Zur Steigerung der Genauigkeit kann es angebracht sein, das Modell um weitere Schwingungselemente (Feder, Dämpfung, Masse) zur Beschreibung der Schwingungen im Antriebstrang zu ergänzen. In der Regel ist es jedoch aufgrund der unterschiedlichen Eigenfrequenzen der Schwingungssysteme Brennkraftmaschine und Antriebsstrang ausreichend, durch geeignete Hochpassfilterung - vorzugsweise des ermittelten Gasmomentes aber auch der Eingangsgröße Drehzahl - eine Dämpfung der unerwünschten Einflüsse des Antriebstranges zu erreichen.

Notwendig wird die Berücksichtigung dieser inneren Torsionsmomente $M_{tors}$ vor allem bei hohen Lasten und Drehzahlen, vorzugsweise bei aufgeladenen LKW-Dieselmotoren, aber auch bei PKW-Motoren im höheren Drehzahlbereich. Wird in diesen Fällen das innere Torsionsmoment $M_{tors}$ nicht in irgendeiner Form im Modell berücksichtigt, sind Fehler bei der Ableitung zylinderindividueller Regelgrößen aus der Motordrehzahl unausweichlich.

Das mit Hilfe des erfindungsgemäßen Verfahrens ermittelte Drehmoment $M_{gas}$, beziehungsweise die daraus abgeleitete Arbeit W pro Arbeitsspiel und Zylinder, kann nun als Eingangsgröße für verschiedene Anwendungen in der Motorsteuerung und der On-Board-Diagnose verwendet werden. Die zylinderindividuelle Arbeit $W_z$ kann beispielsweise als Summenmoment über 120° Kurbelwellenwinkel nach OT des jeweiligen Zylinders z ermittelt werden:

$$W_z = \int_{OT_z}^{OT_z+120°} M_{gas} \, d\psi$$

In diesem Summenmoment $W_z$ ist allerdings auch die Arbeit durch die Expansion ohne Verbrennung enthalten. Der daraus resultierende Gleichanteil kann jedoch bei der Regelung durch eine geeignete Wahl des Regelfaktors berücksichtigt werden. Zur Bildung einer Regelgröße wird vorzugsweise die Abweichung der zylinderindividuellen Arbeit $W_z$ vom Mittelwert aller Zylinder

$$\overline{W} = \frac{1}{4} \sum_{z=1}^{4} W_z$$

ermittelt. Da die so erhaltene Regelgröße noch stochastischen Streuungen unterworfen ist, kann eine Mittelwertbildung über mehrere Arbeitsspiele vorgenommen werden.

Ein Anwendungsbeispiel ist die drehzahlbasierte Einregelung der Magerlaufgrenze bei Ottomotoren. Die Magerlaufgrenze begrenzt den Betriebsbereich für das Luft-Kraftstoff-Verhältnis V, in dem eine reguläre Verbrennung stattfindet. Übersteigt das Luft-Kraftstoff-Verhältnis V die Magerlaufgrenze, so muß mit Zündaussetzern gerechnet werden. Hierbei wird die Erkenntnis ausgenutzt, daß in jedem Betriebspunkt der Brennkraftmaschine 1 sogenannte Zyklenschwankungen auftreten. Dies bedeutet, daß die ermittelten Drehmomente $M_{gas}$ Streuungen in Amplitude und Signalform aufweisen. Dies führt dazu, daß auch die aus dem Drehmoment $M_{gas}$ abgeleitete zylinderspezifische Arbeit $W_z$ von Arbeitsspiel zu Arbeitsspiel streut. Die Stärke der Streuungen, die sogenannte Streubreite, ist abhängig vom Luft-Kraftstoff-Verhältnis V im jeweiligen Zylinder 2. Ein mageres Gemisch führt zu starken, ein fettes Gemisch zu geringen Streuungen. Umgekehrt kann man also aus einer statistischen Auswertung der Streubreite einen Rückschluß auf das zylinderindividuelle Luft-Kraftstoff-Verhältnis V ziehen. Besonders im Bereich der Magerlaufgrenze existiert eine starke Abhängigkeit der Streubreite von einer Veränderung des Luft-Kraftstoff-Verhältnisses V. Dieser Umstand kann für eine zylinderindividuelle Einregelung der Magerlaufgrenze ausgenützt werden. Hierbei wird das Luft-Kraftstoff-Verhältnis V anhand der ermittelten Streubreite so eingeregelt, daß eine stabile Verbrennung gewährleistet bleibt, die Magerlauffähigkeit der Brennkraftmaschine 1 aber voll ausgenutzt wird. Dadurch ergeben sich Vorteile im Verbrauch und in den Abgasemissionen.

Ein weiteres Anwendungsbeispiel ist die adaptive Zylindergleichlaufregelung. Mit Hilfe des aus der Drehzahl n ermittelten Drehmoments $M_{gas}$ kann eine Gleichstellung der jeweiligen Zylinderleistung erreicht werden. Hierzu wird vorzugsweise ein adaptives Kennfeld, das die Abweichungen jedes Zylinders 2 vom Mittelwert in jedem Drehzahl- und Lastpunkt enthält und sich langsam an die Altersdrift der Brennkraftmaschine 1 anpaßt, verwendet. Da die Regelgröße bei einer Mittelung über beispielsweise zwanzig Arbeitsspiele ebenfalls alle zwanzig Arbeitsspiele kurbelwellensynchron eintrifft, wird der Regler vorzugsweise ebenfalls kurbelwellensynchron ausgelegt. Der Regelfaktor wird dabei vorzugsweise so gewählt, daß bis zum Ende des Regelzyklus die Abweichung des letzten Zyklus vollständig ausgeglichen ist. Um zu verhindern, daß bei schnellen Lastwechseln aufgrund der Mittelung Abweichungen aus anderen Kennfeldpunkten im aktuellen Kennfeldpunkt zu Veränderungen führen, wird eine Speicherung in das Kennfeld nur dann zugelassen, wenn während der gesamten für die Mittelung der Regelgröße benötigte Zeitdauer der aktuelle Kennfeldpunkt nicht verlassen wurde. Um zu verhindern, daß bei Ausfall eines Zylinders die anderen Zylinder bis über die Rauchgrenze mit Kraftstoff versorgt werden, kann die Verstellung auf einen Maximalwert, beispielsweise auf 25%, begrenzt werden.

Durch diese adaptive Regelung sind enorme Einsparungen in der Fertigung und in der Wartung der.Brennkraftmaschinen möglich, da fertigungs- oder verschleißbedingte Toleranzen automatisch ausgeglichen werden. Weiterhin wird dadurch eine bessere Ausnutzung der Motorleistung beziehungsweise eine Verringerung der Abgaswerte ermöglicht.

Als weiteres Anwendungsbeispiel ist es auch denkbar, die Drehmomentabgabe der Brennkraftmaschine 1 unter Komfortgesichtspunkten zu vergleichmäßigen, was aufgrund der Torsionseinflüsse an der Kurbelwelle 5 nicht unbedingt gleichbedeutend mit einer Zylindergleichstellung ist. Schließlich kann das ermittelte Drehmoment $M_{gas}$ auch zur On-Board-Diagnose der Verbrennung und der Kompression, sowie zur Erkennung von Bauteilversagen, das sich durch spezifische Veränderung der Verbrennungsqualität äußert, verwendet werden.

Das erfindungsgemäße Verfahren ist nicht nur auf die oben beschriebenen Vierzylinder-Brennkraftmaschinen 1 beziehungsweise auf die angegebenen Anwendungsbeispiele beschränkt. Es kann selbstverständlich auch auf andere Brennkraftmaschinen und auch auf andere Komponenten der Motorsteuerung angewendet werden.

**Patentansprüche**

1. Verfahren zur Bestimmung von Einzelzylinder-Drehmomenten einer Mehrzylinder-Brennkraftmaschine (1) durch Auswerten der Drehzahlinformation, welche über die Ermittlung von Umlaufzeiten eines mit der Kurbelwelle (5) fest verbundenen Bauteils erfaßt wird, wobei aus der mit der Drehzahl korrelierten Winkelgeschwindigkeit ($\omega$) mit Hilfe des Trägheitsmoments (J) der Brennkraftmaschine (1) das Rotationsdrehmoment ($M_{rot}$) berechnet wird, wobei zusätzlich das Drehmoment ($M_{osz}$) der oszillierenden Massen, das Drehmoment ($M_{tors}$) aus der Kurbelwellentorsion und das statische Drehmoment ($M_{stat}$), welches sich aus allen langsam veränderlichen Reib-, Nutz- und Lastmomenten zusammensetzt, anhand eines Motormodells berechnet wird und daß aus der Bilanz dieser Ein-

zeldrehmomente

$$M_{gas} + M_{rot} + M_{osz} + M_{tors} + M_{stat} = 0$$

die aus den Gasdrücken in den Zylindern (2) resultierenden Drehmomente ($M_{gas}$) ermittelt und der Onboard-Diagnose und/oder der Motorsteuerung als Eingangsgröße zur Verfügung gestellt werden,
**dadurch gekennzeichnet,**
daß das Drehmoment ($M_{tors}$) der Kurbelwellentorsion und/oder die Wirkung des Drehmoments ($M_{tors}$) der Kurbel-wellentorsion auf die Regelgrößen der Motorsteuerung (13) zylinderindividuell in einem betriebsparameterabhängigen Kennfeld abgelegt ist.

2. Verfahren nach Anspruch 1,
   **dadurch gekennzeichnet,**
   daß aus dem Drehmoment ($M_{gas}$) die von den einzelnen Zylindern (2) pro Arbeitstakt abgegebene Arbeit (W) ermittelt wird.

3. Verfahren nach Anspruch 1,
   **dadurch gekennzeichnet,**
   daß die Momente der rotierenden und der oszillierenden Massen ($M_{rot}$, $M_{osz}$) auf der Basis eines starren Modells des Triebwerks (9) berechnet werden nach den Formeln

$$M_{rot} = -J\dot{\omega}$$

und

$$M_{osz} = -m_0 r^2 \dot{x}(\dot{x}\dot{\omega} + \ddot{x}\omega^2)$$

wobei bedeuten

| | |
|---|---|
| $J$ | rotierende Massenträgheit der Brennkraftmaschine |
| $\omega$ | Winkelgeschwindigkeit |
| $\dot{\omega}$ | Winkelbeschleunigung |
| $m_0$ | oszillierende Massen |
| $r$ | Kurbelradius |

$$\dot{x} = \sin\Psi + \lambda\,\frac{\sin\Psi\,\cos\Psi}{\sqrt{1 - \lambda^2\sin^2\Psi}} \quad \text{relative Kolbengeschwindigkeit}$$

$\lambda$    Pleuelstangenverhältnis
$\psi$    Kurbelwinkel und

$$\ddot{x} = \cos\Psi + \lambda\frac{\cos^2\Psi - \sin^2\Psi + \lambda^2\sin^4\Psi}{\sqrt{1 - \lambda^2\sin^2\Psi}^3} \quad \text{relative Kolbenbeschleunigung}$$

4. Verfahren nach Anspruch 1,
   **dadurch gekennzeichnet,**
   daß die ermittelten Drehmomente ($M_{gas}$) zur adaptiven Zylindergleichlaufregelung verwendet werden.

5. Verfahren nach Anspruch 1,
   **dadurch gekennzeichnet,**

daß die ermittelten Drehmomente ($M_{gas}$) zur Vergleichmäßigung der Drehmomentabgabe verwendet wird.

**6.** Verfahren nach Anspruch 1,
**dadurch gekennzeichnet,**
daß die ermittelten Drehmomente ($M_{gas}$) zur Einregelung der Magerlaufgrenze verwendet wird.

**7.** ,Verfahren nach Anspruch 6,
**dadurch gekennzeichnet,**
daß für die einzelnen Zylinder (2) die Streuung der Drehmomentverläufe ($M_{gas}$) bezüglich Form und/oder Amplitude für mehrere aufeinanderfolgende Arbeitsspiele erfaßt wird und daß das Luft-Kraftstoff-Verhältnis (V) anhand der ermittelten Streubreiten zylinderindividuell auf vorgegebene Sollwerte eingeregelt wird.

**Claims**

**1.** A process to determine single cylinder torques in a multi-cylinder internal combustion engine (1) by evaluating the speed information which is measured by calculating rotation times of a component fixed rigidly to a crankshaft (5), with the rotational torque ($M_{rot}$) being calculated from the angular velocity ($\omega$) correlated with the speed using the moment of inertia (J) of the internal combustion engine (1) and, in addition, the torque ($M_{osz}$) of the oscillating masses, the torque ($M_{tors}$) from the crankshaft torsion and the static torque ($M_{stat}$) including all slowly variable friction, wear and load moments being calculated using an engine model, and with the torques ($M_{gas}$) resulting from the combustion pressures in the cylinders (2) being calculated from the sum of these individual torques:

$$M_{gas} + M_{rot} + M_{osz} + M_{tors} + M_{stat} = 0$$

and supplied to the onboard diagnostics system and/or the engine control system as input values,
**characterised in that**
the torque ($M_{tors}$) of the crankshaft torsion and/or the effect of the torque ($M_{tors}$) of the crankshaft torsion is/are stored with the control variables for the engine control system (13) individually for each cylinder in a characteristic field dependent on operating parameters.

**2.** A process in accordance with Claim 1,
**characterised in that**
the torque ($M_{gas}$) is used to calculate the work (W) done by each of the individual cylinders (2) per power stroke.

**3.** A process in accordance with Claim 1,
**characterised in that**
the moments of the rotating and the oscillating masses ($M_{rot}$, $M_{osz}$) are calculated on the basis of a rigid model of the engine (9) in accordance with the following formulae:

$$M_{rot} = - J \, \dot{\omega}$$

and

$$M_{osx} = - m_0 r^2 \dot{x} (\dot{x} \dot{\omega} + \ddot{x} \omega^2)$$

where

$J =$     rotating inertia of masses of the internal combustion engine
$\omega =$     angular velocity
$\dot{\omega} =$     angular acceleration
$m_0 =$     oscillating masses
$R =$     crank radius

$$\dot{x} = \sin\psi + \lambda\ \frac{\sin\psi\cos\psi}{\sqrt{1 - \lambda^2\sin^2\psi}} = \text{relative piston speed}$$

$\lambda =$ connecting rod ratio
$\psi =$ crank angle and

$$\ddot{x} = \cos\psi + \lambda\ \frac{\cos^2\psi - \sin^2\psi + \lambda^2\sin^4\psi}{\sqrt{1 - \lambda^2\sin^2\psi}} = \text{relative piston acceleration}$$

4. A process in accordance with Claim 1,
   **characterised in that**
   the torques ($M_{gas}$) calculated are used for adaptive cylinder synchronisation

5. A process in accordance with Claim 1,
   **characterised in that**
   the torques ($M_{gas}$) calculated are used to balance torque delivery.

6. A process in accordance with Claim 1,
   **characterised in that**
   the torques ($M_{gas}$) calculated are used to set the lean running limit.

7. A process in accordance with Claim 1,
   **characterised in that**
   the distribution of the torque curves ($M_{gas}$) with regard to shape and/or amplitude for several consecutive operating cycles is recorded for each individual cylinder (2), and the air/fuel ratio (V) is set to pre-determined reference values using the spreads calculated for each individual cylinder.

**Revendications**

1. Procédé de détermination du couple de cylindres individuels d'un moteur à combustion interne (1) à plusieurs cylindres, par traitement de l'information de vitesse de rotation, qui est relevée par l'intermédiaire de la détermination de temps de révolution d'une pièce liée de manière fixe au vilebrequin (5), procédé selon lequel on calcule le couple de rotation ($M_{rot}$) à partir de la vitesse angulaire ($\omega$), qui est en corrélation avec la vitesse de rotation, à l'aide du moment d'inertie (J) du moteur à combustion interne (1), selon lequel on calcule en supplément, à l'aide d'un modèle du moteur, le couple ($M_{osz}$) des masses oscillantes, le couple ($M_{tors}$) de la torsion du vilebrequin et le couple statique ($M_{stat}$), qui est composé de tous les couples de friction, utiles et résistants variant lentement, et selon lequel, à partir du bilan de ces couples individuels

$$(M_{gas}) + (M_{rot}) + (M_{osz}) + (M_{tors}) + (M_{stat}) = 0$$

on détermine les couples ($M_{gas}$) résultant des pressions des gaz dans les cylindres (2) et on les met à disposition du système de diagnostic de bord et/ou de la commande du moteur, en tant que grandeur d'entrée, caractérisé en ce que le couple ($M_{tors}$) de la torsion du vilebrequin et/ou l'action du couple ($M_{tors}$) de la torsion du vilebrequin sur les grandeurs de réglage de la commande de moteur (13), est ou sont stockés dans un diagramme caractéristique fonction des paramètres de fonctionnement.

2. Procédé selon la revendication 1, caractérisé en ce qu'à partir du couple ($M_{gas}$), on détermine le travail (W) fourni par les cylindres individuels (2), par cycle de travail.

3. Procédé selon la revendication 1, caractérisé en ce que les couples des masses en rotation et des masses os-

cillantes ($M_{rot}$, $M_{osz}$) sont calculés sur la base d'un modèle rigide du groupe de transmission et de propulsion (9), d'après les formules

$$M_{rot} = -J\dot{\omega}$$

et

$$M_{osz} = -m_o r^2 \dot{x}(\dot{x}\dot{\omega} + \ddot{x}\omega^2)$$

avec

*J    inertie de masse en rotation du moteur à combustion interne*

$\omega$    *vitesse angulaire*

$\dot{\omega}$    *accélération angulaire*

$m_o$    *masses oscillantes*

*r    rayon de manivelle*

$$\dot{x} = \sin\Psi + \lambda\,\frac{\sin\Psi\cos\Psi}{\sqrt{1 - \lambda^2\sin^2\Psi}} \quad \textit{vitesse relative de piston}$$

$\lambda$    *rapport de bielle*

$\Psi$    *angle de manivelle, et*

$$\ddot{x} = \cos\Psi + \lambda\,\frac{\cos^2\Psi - \sin^2\Psi + \lambda^2\sin^4\Psi}{\sqrt{1 - \lambda^2\sin^2\Psi}^{\,3}} \quad \textit{accélération relative de piston.}$$

4.  Procédé selon la revendication 1, caractérisé en ce que les couples ($M_{gas}$) déterminés sont utilisés pour la régulation adaptative de synchronisation des cylindres.

5.  Procédé selon la revendication 1, caractérisé en ce que les couples ($M_{gas}$) déterminés sont utilisés pour uniformiser la fourniture du couple.

6.  Procédé selon la revendication 1, caractérisé en ce que les couples ($M_{gas}$) déterminés sont utilisés pour réguler la limite de marche à mélange pauvre.

7.  Procédé selon la revendication 6, caractérisé en ce que l'on relève pour les différents cylindres (2) individuels, la dispersion des courbes de couple ($M_{gas}$) relativement à la forme et/ou à l'amplitude, pour plusieurs cycles de travail successifs, et en ce que le rapport air - carburant (V) est réglé individuellement par cylindre, sur des valeurs de consigne prescrites, à l'aide des étendues de dispersion déterminées.

$M_{gas}$

$M_{osc}$

$M_{rot}$

$M_{stat}$

$M_{tors}$

| 11 | Drehzahlerfassung |

| 12 | Daten - Puffer |

| 14 | Ermittle $M_{gas}$ |

| 13 | Motor - steuerung |

adaptive Zylindergleichlauf-regelung

Vergleichmäßigung der Drehmomentabgabe

Einregelung der Magerlaufgrenze

On - Board - Motordiagnose

. . .